(19) Europäisches Patentamt
European Patent Office
Office européen des brevets

(11) **EP 2 182 732 A1**

(12) **EUROPEAN PATENT APPLICATION**

(43) Date of publication:
**05.05.2010 Bulletin 2010/18**

(51) Int Cl.:
***H04N 7/26*** *(2006.01)*     ***H04N 7/50*** *(2006.01)*

(21) Application number: **08018805.5**

(22) Date of filing: **28.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Panasonic Corporation
Kadoma-shi
Osaka 571-8501 (JP)**

(72) Inventors:
• **Drugeon, Virginie
63225 Langen (DE)**

• **Wedi, Thomas
63225 Langen (DE)**
• **Narroschke, Matthias
63225 Langen (DE)**

(74) Representative: **Grünecker, Kinkeldey,
Stockmair & Schwanhäusser
Anwaltssozietät
Leopoldstrasse 4
80802 München (DE)**

(54) **Switching between scans in image coding**

(57)     Transformation of image pixels blocks into transformation coefficient blocks is a part of a majority of video coding methods used at present. After the transformation, the blocks of coefficients are scanned in order to obtain a sequence of transformation coefficients, which are further encoded. Depending on the distribution of the coefficient values within a block to be encoded, the depending on the applied scan order, the coefficient values are more or less efficiently encoded. Since the distribution of coefficients values within the block to be encoded may vary considerably even for the blocks of the same image, applying a fixed predefined scan may result in a reduced coding gain. In accordance with the present invention, the scan order is determined based on the values of the transformation coefficients in the current block, i.e. in the block being encoded/decoded. Such determination allows switching of scan orders adaptively to the block characteristics and does not require any signalling overhead when the transform coefficient values known at both encoder and decoder are used.

Fig. 4

EP 2 182 732 A1

**Description**

The present invention relates to the compression of video data, in particular, to compressing and decompressing video data with improved coding efficiency.

BACKGROUND OF THE INVENTION

At present, the majority of standardized video coding algorithms is based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted blocks or subblocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called prediction residuals, is then calculated. Another encoding step is a transformation of a block of residuals from the spatial (pixel) domain into a frequency domain. The transformation aims at reducing the correlation of the input block. Result of the transformation is a block of values called transformation coefficients or shortly transform coefficients, the block having the same size as the block of residuals having been input to the transformation. Further encoding step is quantization of the transformation coefficients. In this step the actual lossy (irreversible) compression takes place.

After quantization, the coefficients are scanned in a predefined order, thus forming a one-dimensional sequence. Usually, the compressed transform coefficient values are further compacted (losslessly compressed) by means of an entropy coding. In addition, side information necessary for reconstruction of the encoded video signal is encoded and provided together with the encoded prediction error signal. This is for example information about the spatial and/or temporal prediction, amount of quantization, etc.

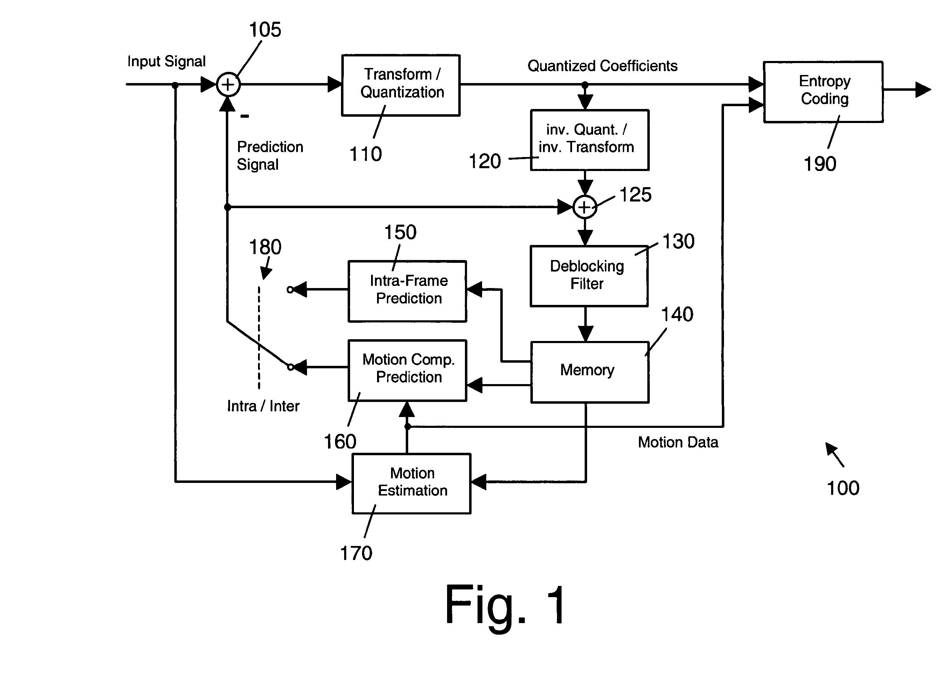

Figure 1 is an example of a typical H.264/MPEG-4 AVC standard compliant video encoder 100. The H.264/MPEG-4 AVC standard (which is included herein by reference) combines all above mentioned encoding steps. A subtractor 105 first determines differences between a current block (block to be encoded) of a video image (input signal) and a corresponding predicted block (prediction signal). A temporally predicted block is computed using the previously encoded images which are stored in a memory 140. A spatially predicted block is interpolated from the values of boundary pixels in the neighboring blocks which have been previously encoded and stored in the memory 140. The memory unit 140 thus operates a delay unit that allows a comparison between current signal values and the prediction signal generated from previous signal values. The memory 140 can store a plurality of previously encoded video frames. The difference between the input signal and the prediction signal, denoted prediction error or residual, is then transformed and quantized 110. After scanning the quantized coefficients, entropy encoder 190 is applied in order to further reduce the amount of data in a lossless way.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal, which is known at both sides. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the decoded prediction error signal. The video signal after deblocking is the decoded signal which is generally displayed at the decoder side (if no post filtering is applied). The deblocking filter in H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency. The decoded signal is then stored in the memory 140.

The prediction signal in H.264/MPEG-4 AVC is obtained either by a temporal or by a spatial prediction. The type of prediction can be varied on a per macroblock basis. Macroblocks predicted using temporal prediction are called inter-encoded and macroblocks predicted using spatial prediction are called intra-encoded. Here, the term "inter" relates to inter-picture prediction, i.e. prediction using information from previous or following frames. The term "intra" refers to the spatial prediction, which only uses the already encoded information within the current video frame. The type of prediction for a video frame can be set by the user or selected by the video encoder so as to achieve a possibly high compression gain. In accordance with the selected type of prediction, an intra/inter switch 180 provides corresponding prediction signal to the subtractor 105.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images.

Intra-frame prediction uses a predefined set of intra-prediction modes which basically predict the current block using the boundary pixels of the neighboring blocks already encoded. The different types of spatial prediction refer to a different edge direction, i.e. the direction of the applied two-dimensional interpolation. The prediction signal obtained by such interpolation is then subtracted from the input signal by the subtractor 105 as described above. In addition, spatial prediction type information is entropy encoded and signalized together with the encoded prediction error signal.

In order to be decoded, inter-encoded images require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I- type macroblocks. An inter-encoded macroblock (P- or B- macroblock) is predicted by employing motion compensated prediction 160. First, a best-matching block is found for the current block within a previously encoded and decoded video frame by a motion estimator 170. The best-matching block then becomes a prediction signal and the relative displacement (motion) between the current block and its best match is then signalized as motion data in the form of two-dimensional motion vectors within the side information provided together with the encoded prediction error signal. In order to optimize prediction accuracy, motion vectors may be determined with a sub-pixel resolution e.g. half pixel or quarter pixel resolution. A motion vector with sub-pixel resolution may point to a position within an already decoded frame where no real pixel value is available, i.e. a sub-pixel position.

For both the intra- and the inter-encoding modes, the differences between the current input signal and the prediction signal are transformed and quantized by transform quantization unit 110 , resulting in the quantized transform coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality than high frequency components so that more bits can be spent for coding the low frequency components than the high frequency components.The coefficients are generally quantized. The possible representation values of the quantizer are coded and transmitted to the receiver. For this purpose, in H.264/MPEG-4 AVC, a so-called quantization parameter (QP) is coded and transmitted, which represents the distance between uniformly distributed representation values. Together with the knowledge of the representation values of the quantizer, a quantized coefficient is often being coded by a so called level, whereas each level corresponds uniquely to a representation value. After quantization, the two-dimensional matrix of quantized coefficients is converted into a one-dimensional array to pass the entropy encoder. Typically, this conversion is performed by a so-called zig-zag scanning, which starts in the upper left corner of the two-dimensional array and scans the two-dimensional array in a predetermined sequence ending in the lower right corner. As the energy is typically concentrated in the left upper part of the image, corresponding to the lower frequencies, the zig-zag scanning results in an array where usually the last values are zero. This allows for efficient encoding using, for instance, run-length codes as a part of/before the actual entropy coding 190. In general, the term run-length code refers to any code which encodes runs of symbols instead of single symbols. Hereby, a run represents the number of symbols of the same value. In the context of entropy coding of the quantized coefficients, quantized coefficients or levels of the value zero are often represented by runs. A run is often also coded together with the value or the level of the subsequent quantized coefficient of a value unequal to zero.

For instance, a sequence of levels of quantized coefficients
3 2 0 0 0 0 1 0 2 0 0 0 1 1 0 0 0 0 4 0 ... 0

can be represented by pairs of (run,level)

$$(0, 3)(0, 2)(4, 1)(1, 2)(3, 1)(0, 1)(4, 4)(EOB).$$

Here, the End Of Block (EOB) symbol indicates that all of the remaining quantized coefficients of the current image block being encoded are zero. Since the number of coefficients per block is (assumed to be) known, such run-length encoded sequence is uniquely decodable. The pair (run, level) may also be further encoded as a one codeword or as two separated codewords, e.g by code words of a Huffman code or an arithmetic code.

Thus, other variations of the run-length coding may be used in image and video coding. For instance, the (run, level) pair or the (level, run) pair may define the run of coefficients with magnitude "level". In such encoding, the example sequence above would be encoded in the following sequence of pairs:

$$(3,1)(2,1)(0,4)(1,1)(0,1)(2,1)(0,3)(1,2)(0,4)(4,1)(0,EOB).$$

Such encoding could be of benefit if longer runs of differently valued coefficients were expected. In general, the sign of the coefficients may be encoded separately, or the level may be a signed value.

The run-length encoding as described above has been used as a part of entropy coding in several image and video coding standards so far. However, H.264/MPEG-4 AVC standard employs a more sophisticated coding, comprising various variable length encoding types for different syntax elements. In particular, H.264/MPEG-4 AVC specifies two alternative methods of entropy coding: a low-complexity technique based on context-adaptively switched sets of variable length codes, known as CAVLC, and the computationally more demanding algorithm of context-based adaptive binary coding (CABAC), the efficiency of which is higher tan the efficiency of CAVLC especially for longer blocks to be encoded. Both methods are context adaptive, meaning that they assume a non-stationary statistics of the input data and adapt the encoding accordingly.

CAVLC is supported by all profiles of the H.264/MPEG-4 AVC. It comprises a set of Exp-Golomb integer variable length codes applied to syntax elements other than transform coefficients. The scanned and quantized transform coefficients of a block typically contain only a few significant, i.e., non-zero coefficients, where, in addition, a predominant occurrence of coefficient levels with magnitude equal to one, so-called trailing ones, is observed at the end of the scan. Therefore, as a preamble, first the number of nonzero coefficients and the number of trailing ones are transmitted using a combined codeword, where one out of four variable length coding (VLC) tables are used based on the number of significant levels of neighboring blocks. Then, in the second step, sign and level value of significant coefficients are encoded by scanning the list of coefficients in reverse order. By doing so, the variable length coding for coding each individual level value is adapted on the base of the previously encoded level by choosing among six variable length coding tables. Finally, the zero quantized coefficients are signaled by transmitting the total number of zeros before the last nonzero level for each block, and additionally, for each significant level the corresponding run, i.e., the number of consecutive preceding zeros. By monitoring the maximum possible number of zeros at each coding stage, a suitable variable length code is chosen for the coding of each run value. A total number of 32 different VLCs are used in CAVLC entropy coding mode, where, however, the structure of some of these VLCs enables simple on-line calculation of any code word without recourse to the storage of code tables.

The CABAC design is based on the key elements: binarization, context modeling, and binary arithmetic coding. Binarization enables efficient binary arithmetic coding via a unique mapping of non-binary syntax elements to a sequence of bits, a so-called bin string. Each element of this bin string can either be processed in the regular coding mode or the bypass mode. The latter is chosen for selected bins such as for the sign information or lower significant bins, in order to speedup the whole encoding (and decoding) process by means of a simplified coding engine bypass. The regular coding mode provides the actual coding benefit, where a bin may be context modeled and subsequently arithmetic encoded. As a design decision, in general only the most probable bin of a syntax element is supplied with a context model using previously encoded bins. Moreover, all regular encoded bins are adapted by estimating their actual probability distribution. The probability estimation and the actual binary arithmetic coding is conducted using a multiplication-free method that enables efficient implementations in hardware and software.

In the above three examples of run-length coding, the term "level" had a different meaning. The word level is typically employed to designate the value of a quantized transform coefficient (quantizer level), signed or unsigned. Thus, in general, the term "level" may also refer to a zero-valued coefficients.

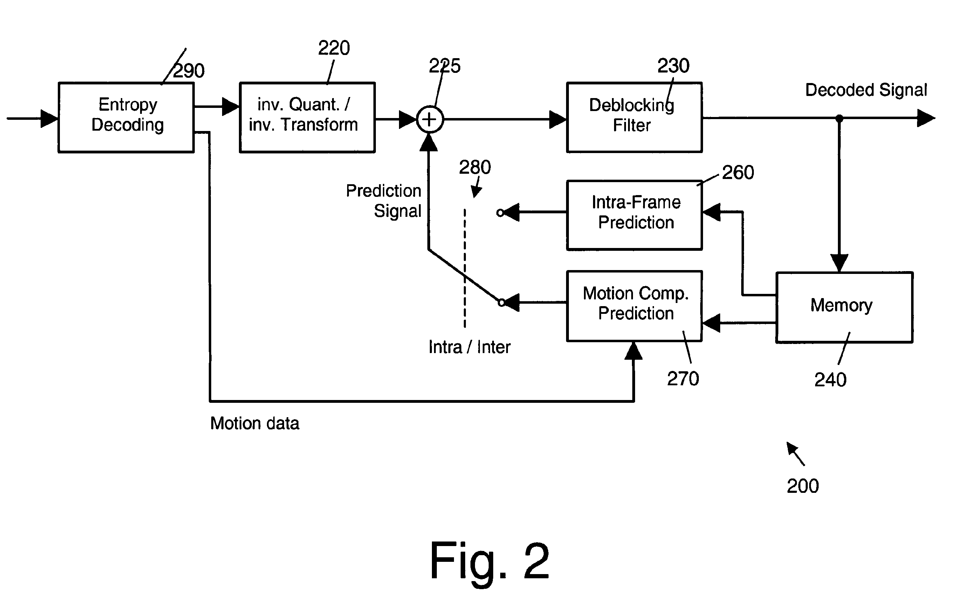

Figure 2 illustrates an example decoder 200 compliant with the H.264/MPEG-4 AVC video coding standard. The encoded video signal (input signal to the decoder) first passes to entropy decoder 290, which decodes the quantized coefficients, and the other information elements necessary for decoding such as motion data, type of prediction etc. The quantized coefficients are inversely scanned in order to obtain a two-dimensional matrix which is then fed to inverse quantization and inverse transformation 220. After inverse quantization and inverse transformation 220, a decoded (quantized) prediction error signal is obtained, which corresponds to the differences obtained by subtracting the prediction signal from the signal input to the encoder. The prediction signal is obtained from either a temporal or a spatial prediction 270 and 260, respectively, which are switched 280 in accordance with a received information element signalizing the prediction applied at the encoder. The decoded information elements further include the information necessary for the prediction such as prediction mode in the case of intra-prediction and motion data in the case of motion compensated prediction.

The quantized prediction error signal in the spatial domain is then added by means of an adder 225 to the prediction signal obtained either from the motion compensated prediction 270 or intra-frame prediction 260. The reconstructed image may be passed through a deblocking filter 230 and the resulting decoded signal is stored in the memory 240 to be applied for temporal or spatial prediction of the following blocks.

The transformation employed in the majority of today's image and video encoding standards transforms the original image pixels, or image pixels of its prediction error signal into the domain of spatial frequency, abbreviated as frequency domain. The aim of the transformation is to de-correlate the input image in order to concentrate the information therein to enable more efficient encoding. A de-correlation transformation such as Karhunen-Loève transformation requires knowledge of the second order statistics of the input signal. However, the statistics of natural images varies not only from image to image, but may also differ for image areas within the same picture. Thus, estimating the statistics would increase the complexity of encoding and require signaling of the transformation parameters. Therefore, the majority of image and coding standards nowadays employ a fixed transformation, such as DCT or its integer version, whose performance is close to the performance of the ideal (de-correlation) transformation for most of the images.

The transformation of the prediction error signal typically concentrates the energy for a natural image in the left upper part of the transform block corresponding to lower frequencies, i.e. to the smoother parts of the image. In general, the high frequencies are less important to human perception than the lower frequencies. The higher frequencies correspond to rapidly changing details such as impulse noise. The transformation coefficients with higher values are typically concentrated within the left upper part of the transformed image and the rest contains zeros, or small groups with lower values. Therefore, instead of reading the transformation coefficient values row-by-row from the two-dimensional block before encoding them serially, a zig-zag scanning has been successfully deployed by the most of video coding standards, such as MPEG-X and H.26X.

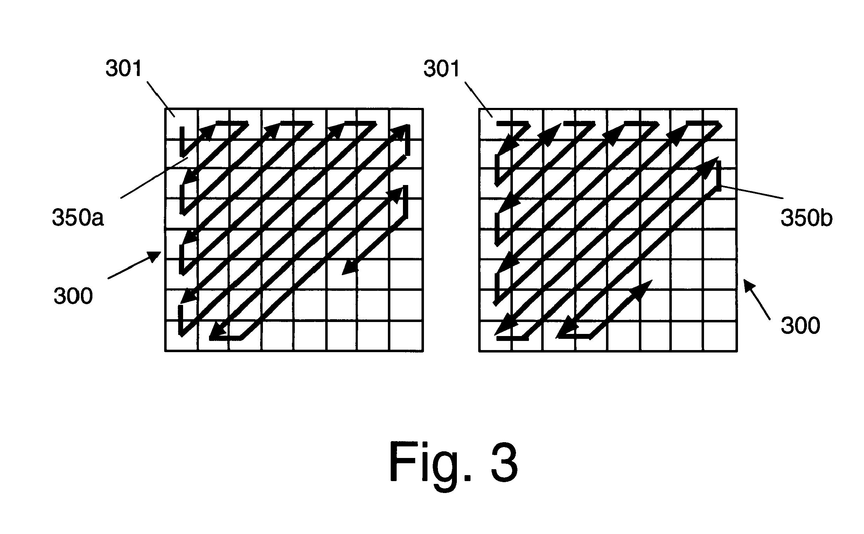

Figure 3 illustrates two examples of a zig-zag scan applied to a block 300 of 8 x 8 pixels. The upper left transformation coefficient 301 is sometimes called DC coefficient, corresponding to a direct current component after a frequency transformation. Starting by the DC coefficient 301, the other transformation coefficients are scanned in the order indicated by a scan order line 350a or 350b. Thus, for the typical, rather smooth, natural image blocks, a sequence of coefficients is obtained, having the majority of non-zero coefficients at the beginning and ending with a sequence of zeros. Such sequence can be efficiently further compressed, for instance, by a run-length encoding as described above.

However, the assumption of smoothness for the image blocks is in general not necessarily fulfilled. In particular, for image blocks containing sharp edges or textures, the distribution of transformation coefficient values within the transformed image block may substantially differ. In such blocks, groups of or single non-zero values may occur in the higher frequency areas. After zig-zag scanning of blocks with non-zero coefficient values distributed in the area of higher frequencies, the resulting sequence of coefficients will contain shorter zero runs, which will in turn lead to lower efficiency of the run-length encoding. Alternatively, other scan method could be applied to blocks containing higher frequencies. However, the signaling of the employed scan order, again, reduces the compression gain of the image or video encoding.

SUMMARY OF THE INVENTION

The aim of the present invention is to provide a method for compressing and decompressing video data with an improved data compression rate for the same quality, as well as a corresponding encoder and decoder.

This is achieved by the features as set forth in the independent claims.

Preferred embodiments are the subject matter of dependent claims.

It is the particular approach of the present invention to determine scan order to be applied to a current block of transformation coefficients in image or video encoding and decoding based on the values of transform coefficients within the current block.

Accordingly, it is possible to change the scan order in a locally adaptive manner, i.e. for particular blocks and adapted to the characteristics thereof. Moreover, no additional signalling is required to determine the scan order when the values of transform coefficients known at both encoder and decoder are used. Thus, the same block of coefficients may be encoded more efficiently, resulting in higher compression gain while maintaining the same image quality.

According to a first aspect of the present invention, a method for encoding an image divided into blocks of pixels is provided. Pixel values of a current image block are transformed into transformation coefficients, transformation coefficients of the current image block are sequentially scanned according to a scan order and the scanned transformation coefficients are encoded. The scan order for the current image block is determined based on transformation coefficient values of the current image block.

According to another aspect of the present invention, a method for decoding of the encoded image data divided into blocks of pixels is provided. Encoded scanned transformation coefficients related to a current image block are decoded, inverse-scanned sequentially according to an inverse scan order, and inverse transformed into pixel values of the current image block. The inverse scan order for the current image block is determined based on transformation coefficient values of the current image block.

According to still another aspect of the present invention, an encoder for encoding image data divided into blocks of pixels is provided. The encoder includes a transformation unit for transforming pixel values of a current image block into transform coefficients, a scanning unit for scanning transform coefficients sequentially according to a scan order, and an encoder for encoding the scanned transform coefficients. A determining unit is capable of determining the scan order for the current image block based on transform coefficient values of the current image block.

According to still another aspect of the present invention, a decoder for decoding encoded image data divided into blocks of pixels is provided. The decoder comprises a decoder for decoding encoded scanned transform coefficients of a current image block, a block forming unit for inverse scanning of the decoded transform coefficients of the current image block sequentially according to an inverse scan order; and a transformation unit for inverse transforming inversely scanned transform coefficients of the current image block into pixel values. A determining unit is capable of determining the inverse scan order for the current image block based on transform coefficient values of said current image block.

Preferably, the scan order is selected from a plurality of predefined scan orders. One of the predefined scan orders may be the zig-zag scan or any other fixedly defined scan. One of the predefined scan orders may also be a frequency selective scan in which only a subset of transformation coefficients is scanned while the remaining coefficients are set to zero. The frequency selective scan is not fixed, i.e., it may choose the transformation coefficients to be scanned in an arbitrary way such as additional signalling, or implicit determination, or using of other signalling elements such as, for instance, quantization matrix.

In accordance with an embodiment of the present invention, the scan order is determined adaptively based on the values of coefficients rather than being selected from a set of predefined scans or types of scans. Preferably, the assignment between the values of transform coefficients and the scan is performed dynamically, in the same way at the encoder and the decoder, for instance, based on the values of coefficients of the already encoded blocks. However, the assignment may also be fixed or signalized.

Preferably, the scan order is determined adaptively also within the current block. Accordingly, the position of a next coefficient to be scanned is determined based on the values of previously scanned coefficients. Such scan order has an advantage of adapting to the structure of the block of coefficients even if the image block contained edges. By adapting the scan, the scanned coefficients can be encoded efficiently by an entropy code.

Preferably, the scan order of the first N coefficients is predefined and the position of each following coefficient to be scanned is determined adaptively, depending on values of coefficients previously scanned.

In particular, the order of scan of each coefficient value is determined based on a binary information such as the information if a coefficient in a given position has a zero value or a non-zero value. However, the scan may also be determined based on the values of the coefficients directly or based on any function thereof.

In particular, it is an advantage when the first N transformation coefficients of the plurality of predefined scans are scanned in the same order. In such case, regardless the scan order being selected, the first N coefficients are scanned in the same order and thus, may be used by both encoder and decoder for determining the actual scan order. The presence of the coefficients with higher values apart of the DC coefficients may be an indicator for presence of further higher frequency coefficients.

In accordance with an embodiment of the present invention, the scan order is determined by evaluating a measure calculated based on values of the first $N$ transform coefficients. This measure may be any function of the first $N$ transformation coefficients. Preferably, the measure is a sum of the absolute values of the first $N$ coefficients. However, any other metric may be employed instead or any norm such as sum of square differences, weighted sum, maximum or minimum coefficient value. Other functions may also be used, for instance, measures based on statistic features such as statistical moments, number of coefficients exceeding or being below certain value, or any other measures.

In accordance with another embodiment of the present invention, the scan order is determined based on the number of non-zero transformation coefficients within the current block. Determining the scan order in this way also does not require knowledge of the actual scan order and may thus be applied in the same way at both encoder and decoder. Obviously, in the same way a number of zero transformation coefficients may be used to determine the scan order.

In accordance with still another embodiment of the present invention, the scan order is determined based on levels. When the encoding includes an entropy encoding, in which levels denote (possibly unsigned and/or quantized) values of transform coefficients, they may also be used equally at the encoder and the decoder without knowing the actual scan order. The levels may denote both the zero and the non-zero coefficients, depending on the entropy code applied. Again, any measure determined based on the levels may be used to determine the scan order. Preferably, a sum or a weighted sum of the levels is used due to its low computational complexity. However, any other function such as metric, norm, statistics, etc. may equally be employed instead or in addition.

Preferably, the selection of the scan order for any embodiment of the present invention is based on comparison of the determined measure with a predefined threshold. Preferably, the threshold is provided for a certain number of blocks together with the encoded block coefficients. The number of blocks may correspond to a slice and the threshold may be signalized within a slice header. Alternatively, the threshold may be provided per image or per number of images. However, the threshold can also be fixed or there may be a default threshold that can be possibly replaced by an optional signalling. If the selection of scan order distinguishes more than two predefined scan orders, there may be more than one threshold applied. However, the determination of the scan order does not necessarily rely on a predefined threshold. Statistic methods such as hypothesis testing may be employed to decide on the scan order, or the threshold may be determined dynamically in the same way at the encoder and at the decoder, for instance, based on statistical features of the video sequence, based on encoder/decoder parameters, or similarly.

In accordance with an embodiment of the present invention the determining of the scan order may be enabled or disabled. Preferably, the enabling and/or disabling are triggered by an enabling flag which is provided together with the encoded transformation coefficients. In particular, the enabling flag is set in a slice header. However, the enabling flag may also be set in a different way, for instance, within image or video packets that do not contain the actual image information. The enabling flag may also be provided with finer granularity, for instance, for image areas smaller than slice such as macroblock or block. It may also be provided with a coarser granularity, i.e. for more slices. Hereby, the signalling of the enabling flag may be performed regularly (for instance, each m blocks, macroblocks, slices, frames, group of pictures, etc., wherein m is an integer equal to or greater than 1) or irregularly (for instance, in a packet separated from the video data packet containing the encoded coefficients). In H.264/MPEG-4 AVC based coding, special network abstraction layer units may be used to carry this information at an arbitrary position within the video sequence. Obviously, the enabling flag being set to one if scan switching is enabled and being set to zero if it is disabled, may be replaced by a disabling flag with values one and zero assigned reversely. Enabling and disabling the scan switching allows for automatic or user driven decision to use or not the scan order switching. The switching may be disabled, for instance, if the images to be encoded are known to have statistics where switching does not provide any benefit, or where the benefit provided by scan switching is negligible.

Preferably, scan condition information is included with the enabling flag if the enabling flag signalizes enabling of the scan order determining. In particular, the scan condition information corresponds to the number of coefficients taken into account when determining the scan and/or to the value of the threshold used to determine the scan.

Still preferably, the particular approach of the present invention is applied optionally or mandatory within one of the existing or future video coding standards based on hybrid coding such as H.264/MPEG-4 AVC or its follower(s).

In accordance with another aspect of the present invention, a computer program product comprising a computer-readable medium having a computer-readable program code embodied thereon is provided, the program code being adapted to carry out the present invention.

The above and other objects and features of the present invention will become more apparent from the following description and preferred embodiments given in conjunction with the accompanying drawings, in which:

Figure 1      schematically illustrates, in block diagram form, the configuration of a conventional hybrid video encoder;

Figure 2      schematically illustrates, in block diagram form, the configuration of a conventional hybrid video decoder;

Figure 3      shows examples of a zig-zag scan for an 8 x 8 large block of quantized transform coefficients;

Figure 4      shows a block diagram of a video encoder and decoder in accordance with the present invention;

Figure 5      schematically illustrates a hybrid video encoder part modified by using frequency selective encoding;

Figure 6      shows an example for a zig-zag scan with non-zero coefficients distributed over a frequency selective encoded block for an 8 x 8 large block;

Figure 7      illustrates the re-ordering and scanning of transform coefficients in accordance with frequency selective encoding and scan for 8 x 8 large blocks;

Figure 8      schematically illustrates a frequency selective encoding and scan as well as ordinary zig-zag scan exemplified for 4 x 4 large blocks;

Figure 9       illustrates frequency selective scanning and zig-zag scanning having the common scan order of first ten scanned coefficients for 8 x 8 large blocks;

Figure 10     schematically illustrates a frequency selective encoding and scan as well as ordinary zig-zag scan in accordance with an embodiment of the present invention, exemplified for 4 x 4 large blocks; and

Figure 11     schematically illustrates a frequency selective decoding and inverse scan as well as ordinary inverse zig-zag scan in accordance with an embodiment of the present invention, exemplified for a 4 x 4 large block.

Figure 12A    illustrates steps of a method for encoding an image segmented into blocks in accordance with the present invention.

Figure 12B    illustrates steps of a method for decoding an encoded image segmented into blocks in accordance with the present invention.

DETAILED DESCRIPTION

The problem underlying the present invention is based on the observation that employing the same scan for transformation coefficients of the image blocks with different content characteristics, such as direction and/or sharpness of edges, may lead to varying efficiency of the encoding applied afterwards. This is caused by the non-stationary statistics of the transformation coefficients of different blocks within an image or an image sequence (video).
In order to solve this problem, the present invention provides a method for encoding, a method for decoding, an apparatus for encoding (encoder) and an apparatus for decoding (decoder) of image data divided into blocks of pixels. Accordingly, the scanning of the transformation coefficients in a current block is performed sequentially according to the scan order which has been determined based on the values of coefficients of the current block.
In hybrid image and video coding, an image is typically divided into blocks. These blocks may have a predefined fixed size or may vary. For transformation, usually square shaped blocks of 16, 8, or 4 pixels are employed. However, in general, the blocks do not necessarily have to be square shaped and their size may also be arbitrary. The above mentioned sizes have been selected as a tradeoff between the complexity and performance of the video encoding techniques.

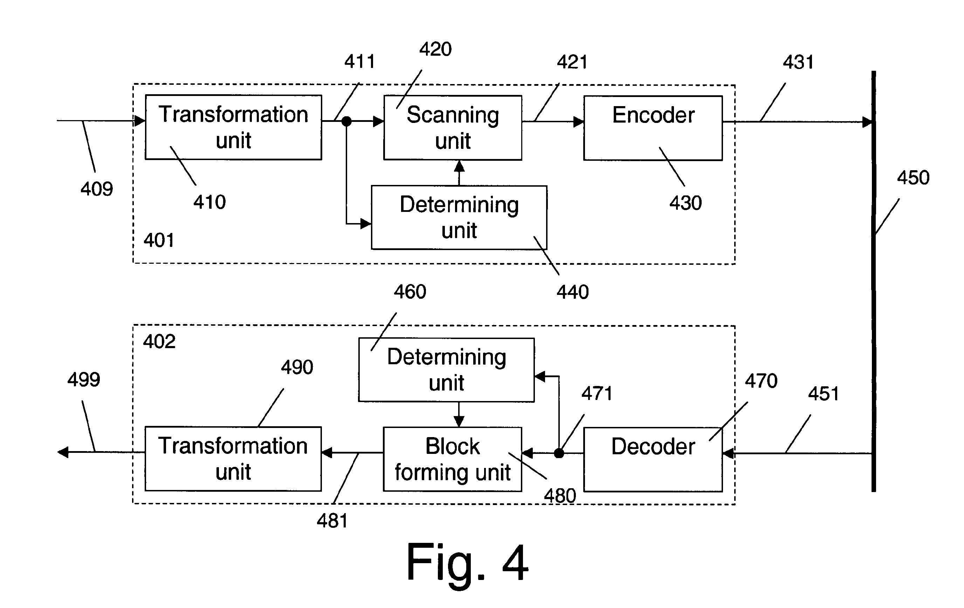

Figure 4 is a block diagram that illustrates an encoder 401 and a decoder 402 in accordance with the present invention. A block of image pixels 409 enters the encoder. Here, the term pixel may be related, for instance, to an image to be encoded, or a prediction error image to be encoded if prediction has been applied in one of the previous encoding stages. Pixel values enter a transformation unit 410. The pixel values correspond, for instance, directly to the image intensity values of a gray scale image, or to values of one of the color components of an arbitrary color space such as red, green and blue color components of the RGB color space or the luminance and two chrominance components of the YUV color space. Transformation unit 410 is capable of transforming the input current block of pixel values 409 into a block of transformation coefficients 411. The values of transformation coefficients 411 are then input to a determination unit 440, capable of determining a scan order for the current image block which is being encoded. The determination unit 440 does not necessarily receive at the input all transform coefficients, a subset of them may be sufficient to determine the scan order based thereon. However, the values of all transform coefficients may also be used to determine the scan order. The result of determination is then fed into a scanning unit 420, which is capable of scanning the transformation coefficients 411 (still organized in a block) sequentially and according with the scan order determined by the determination unit 440. Here, all the transformation coefficients may be scanned or a subset of them. The scanned transform coefficients 421 are ordered serially according to the scan order in order to enter an encoder 430. The encoder 430 performs further encoding of the input sequence of coefficients, preferably a lossless encoding.
Image data 431 encoded in this manner is then provided, for instance, for storage and/or for transmission in a medium 450. The medium 450 may be any kind of storage such as memory, flash, hard disc, portable magnetic or optical disc, etc. The medium 450 may also be any transmission channel formed by the resources of a fixed or wireless system such as xDSL, LAN, WLAN, WiMAX, UMTS, Internet or any other proprietary or standardized system, or a combination of such systems. The encoded image data 451 is then obtained by the decoder 402 from the medium 450, e.g. retrieved from a storage or received from a channel. The encoded image data is preferably the same as the encoded image data 431 provided to the medium. However, if the medium 450 is an error-prone medium, it may also provide erroneous or incomplete image data 451.
A decoder 470 of the image and/or video decoder 402 is capable of parsing/decoding the encoded scanned transformation coefficient data from the obtained image data 451. The sequence of parsed/decoded scanned transformation coefficients 471 or a subset thereof is then delivered to a determination unit 460 which is capable of determining an inverse scan order to be applied to the sequence of decoded scanned transformation coefficients 471. The determination unit 460 determines the inverse scan order based on the values of the decoded transformation coefficients 471 or their subset. The results of the determination and the decoded transformation coefficients 471 are input to a block forming unit 480. The block forming unit 480 applies the determined inverse scan order to the decoded sequence of the transformation coefficients 471 in order to obtain a block of transformation coefficients 481. The block of transformation coefficients 481 enters a transformation unit 490, which is capable of transforming such block of coefficients into pixel values 499 of the current image block being decoded.

In order to work properly, the encoder and decoder are matched, i.e. the determination unit 440 of the encoder works in similar way as the determination unit 460 of the decoder and the result of determination is the same, if the input transformation coefficients 411 and 471 are the same.

It should be noted that the present invention may readily be applied to an encoder and/or a decoder based on H.264/MPEG-4 AVC standard, e.g. the encoder 100 and/or the decoder 200 as illustrated in Figure 1 and 2, respectively. In such an embodiment, the transformation unit 410 of the encoder 401 corresponds to the transformation and quantization 110, wherein a block of prediction error image (output of the subtractor 105) is transformed and quantized. Transform coefficients 411 in this embodiment correspond to transformed and quantized pixel values of the current image block. The determination unit 440, the scanning unit 420 and the encoder 430 may be parts of the entropy encoding 190. Today's H.264/MPEG-4 AVC employs the zig-zag scan 350b described with reference to Figure 3. Other types of a zig-zag like scan are used, for instance, for video sequences in interlaced mode. Instead of the fixed zig-zag scan, switching of scans in accordance with the present invention may thus be performed. Similarly, the decoder 470, together with the block forming unit 480 and the determination unit 460 may form parts of the entropy decoder 290. The inverse quantization and inverse transformation 220 corresponds then to the transformation unit 490.

Preferably, the scan order is determined by selecting from a plurality of predefined scan orders. According to an example implementation of the present invention, one of scan orders to be selected is, the widely used zig-zag scan; another one is a so called frequency selective scan employed together with frequency selective coding.

Frequency selective update and coding have been described in EP 1 720 356 and EP 1 768 416, which are incorporated herein by reference. Frequency selective coding is based on the observation that human eye is less sensitive to high frequencies than to lower frequencies and that modifying and even omitting higher frequencies may often remain unnoticed by the human eye. Thus, frequency selective coding only scans and encodes/decodes certain frequency parts of the input signal, while assuming other frequency parts to be zero. In this way, the compression gain can be increased, especially in combination with frequency selective scan which adapts on the pattern of frequency selective encoded coefficients.

The main idea of such frequency selective video techniques is to update frequency segments on a frame by frame basis. A predefined amount of low frequency coefficients is always updated. These should be the coefficients that are essential for human perception, i.e. the changing of these causes distortions easily detectable by the human eye. For each frame, a low frequency part of each block and one or several segments containing high frequencies are updated. The high frequency segments are updated alternatively for each frame in order to have a complete update of the frequencies after a given number of frames.

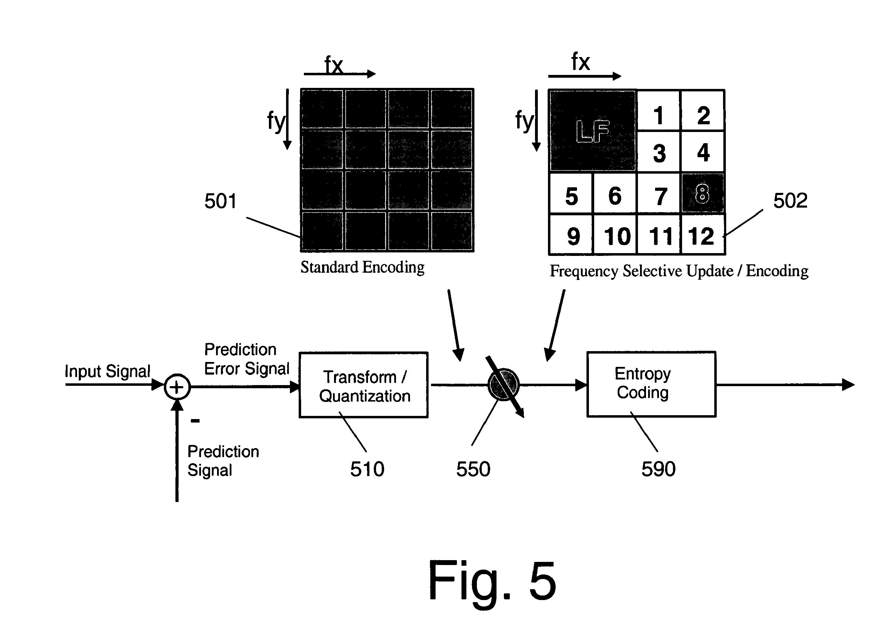

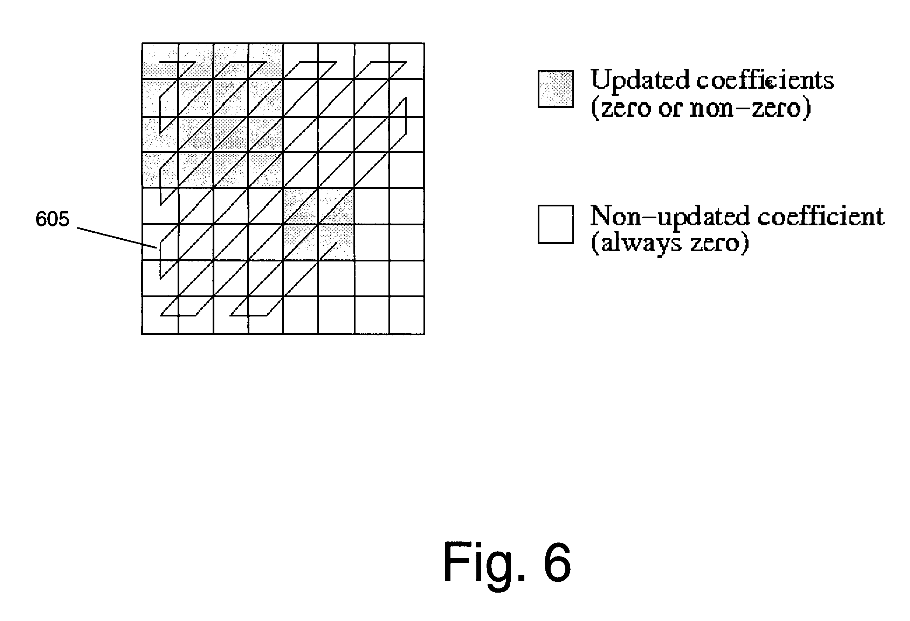

Figure 5 illustrates such frequency selective encoding within a part of a modified block diagram of a hybrid video encoder, which may be, again, the H.264/MPEG-4 AVC encoder as described with reference to Figure 1. The prediction error signal is transformed and quantized 510 and enters a frequency selective encoder 550. Standard encoding would encode the entire block 501 as illustrated by the gray filling color covering all (quantized) transformation coefficients. In the frequency selective encoder 550, the transformed and quantized block 501 of coefficients is divided into segments, of which only a subset is entropy coded and transmitted within the bit stream (updated). The block 502 as illustrated contains a segment of lower frequencies LF and a segment 8 corresponding to a single transformation coefficient, these segments being marked by gray filling to distinguish them from the remaining part of the block which contains the coefficients that are not transmitted, or are considered to be zero. By alternating the updated gray segments frame by frame, the frequencies of a block are updated continuously and the bit rate of each frame is considerably reduced. The coefficients that are not updated are implicitly assumed to be zero. In the (entropy) encoding process 590, the quantized transform coefficients within the block are scanned applying a predetermined scan. This scan starts with the lowest frequency coefficients and scans all the coefficients of the block up to the highest frequency coefficient. When transmitting the prediction error information, the coefficients are transmitted until the last non-zero coefficient is reached. The remaining coefficients are known to be zeros. A disadvantage of a zig-zag scan order 605 applied to a frequency selective encoding is that a lot of zero coefficients may be scanned before the last non-zero coefficient is reached, as can be seen in Figure 6.

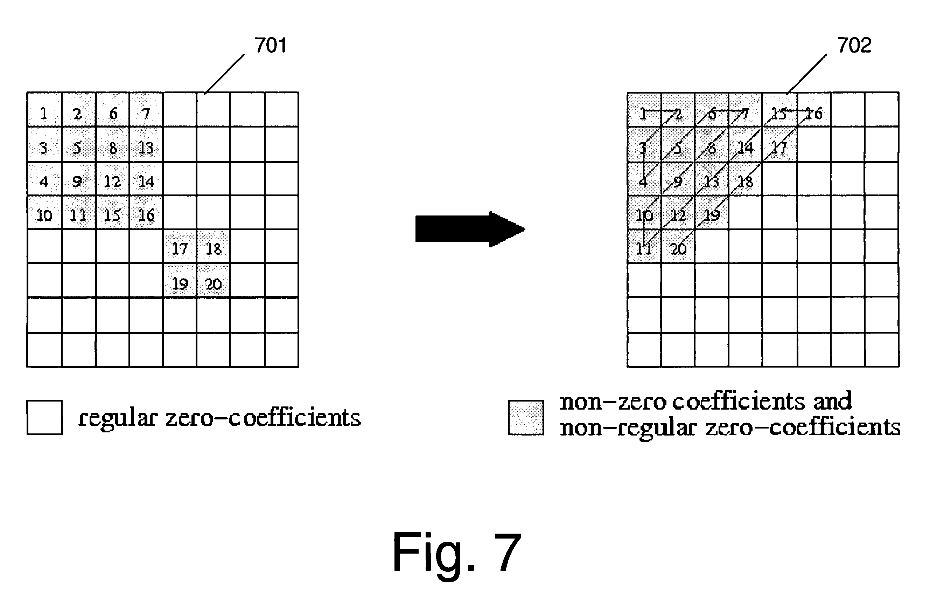

For blocks using frequency selective encoding, certain scanned zero coefficients always have the same location inside each block for the whole picture. In such a case, the scan can be changed to scan only the updated frequencies, or the coefficients are re-ordered to scan the update frequencies at the beginning, as illustrated in Figure 7. A block 701 contains updated coefficients numbered from 1 to 20 and marked by a gray fill. The remaining coefficients are assumed to be zero in accordance with the frequency selective coding scheme. Scanning of the twenty updated coefficients following their increasing numbers would be an option if frequency selective coding were applied to each block. However, in accordance with the present invention, the scan order may be determined based on coefficient values and in this example, either a zig-zag scan or another - the frequency selective scan is used. In order to apply the zig-zag scan basically in the same way, the frequency selective scan may consist in reordering the updated coefficients. A block 702 with reordered coefficients may be scanned by the zig-zag scan wherein the regular zero-coefficients are scanned as last, resulting in a long run of zeros. The determination of the positions of the updated coefficients and the zero coefficients in frequency selective coding may be performed using the quantization matrix as described in EP 1 768 416 in details.

However, updating the same frequency segments for all blocks of one frame is not optimal. The distortion of quality resulting from removing certain frequencies depends considerably on the content of the blocks. It is therefore important to adapt the frequency selective encoding pattern to the content of each block. For certain blocks with high frequencies, as well as for blocks where the prediction fails, it would be an advantage to transmit all the coefficients, i.e. to disable frequency selective encoding, i.e. to select another scan order such as the standard zig-zag order (without reordering the coefficients).

The present invention allows controlling of the use of frequency selective encoding for each block. In order to perform this control in an efficient way, the encoder has to inform the decoder about the enabling and disabling of the frequency selective encoding using possibly a low additional rate. In accordance with the present invention, the decision about enabling or disabling the frequency selective encoding is performed in an equal way at the encoder and at the decoder, based on the available information. Accordingly, no explicit signaling is necessary for the frequency selective encoding control. The information available to the encoder and the decoder can be, for instance, the values of the prediction error. If the prediction error is important, i.e. if the prediction fails, the frequency selective encoding should not be used for such blocks.

According to an embodiment of the present invention, the transform coefficients of each block are used to decide at the encoder side as well as at the decoder side about the enabling and disabling of the frequency selective scan. In order to facilitate this, the coefficient values used for the decision are scanned in the same order independently of the employment of a frequency selective scan or an ordinary scan. Otherwise the decoder would not be capable of making the same determination of the scan order as the encoder.

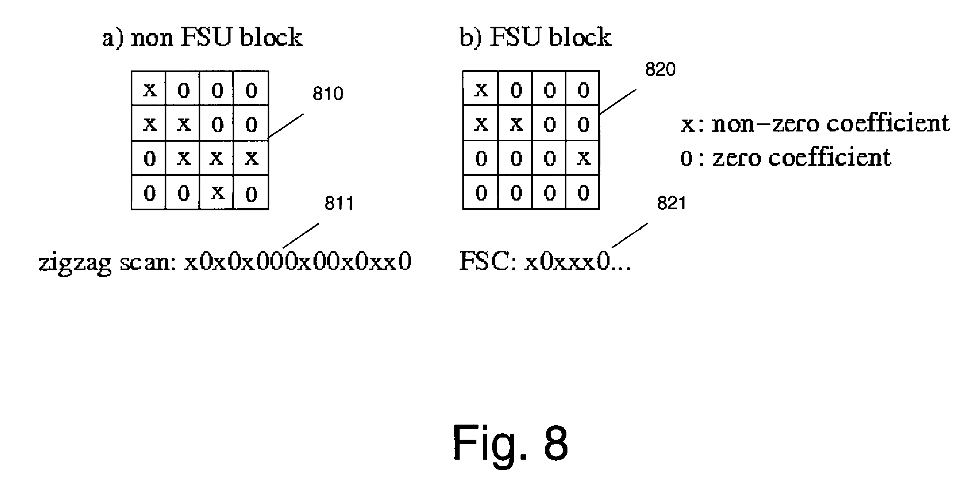

Figure 8 illustrates the benefits that can be achieved by the deployment of frequency selective encoding together with frequency selective scan for blocks with different contents having different distribution of coefficients in the frequency domain. Using of the frequency selective encoding technique may provide a higher coding efficiency than the current H.264/MPEG-4 AVC standard at a similar subjective quality for most regions in the majority of video sequences. However, the erasing of high frequencies around sharp edges produces visible artifacts. In order to reach exactly the same subjective quality as the standard for such areas, frequency selective encoding should be adapted locally. Around edges or in the areas where the prediction fails, frequency selective encoding should not be applied.

According to frequency selective encoding, in order to maximize the coding efficiency, the scanning order of the coefficients is changed depending on the quantization process used for that block. If the block uses frequency selective encoding, a frequency selective scan is used and the coefficients are re-ordered in such a manner that the updated coefficients are scanned at the beginning. As can be seen from Figure 8, the order of scanning essentially influences the form of the resulting serial stream of scanned coefficients. In accordance with this embodiment of the present invention, a block 810 that does not use frequency selective encoding, but rather a standard quantization and scanning process, is scanned in the order defined by the zig-zag scan resulting in serial stream 811. In order to determine each coefficient value at the decoder, this scan must be known. For a frequency selective encoded block 820, a frequency selective scan is used resulting in a serial sequence of coefficients 821. In order to match the encoding and the decoding process, the decoder needs to know whether an ordinary scan, such as a zig-zag scan, or a frequency selective scan has been used. In both frequency selective scan and zig-zag scan, the low frequency coefficients are scanned first. These coefficients are essential for human perception and thus they are always updated by the frequency selective encoding and always transmitted at the beginning, even if a frequency selective scan is applied.

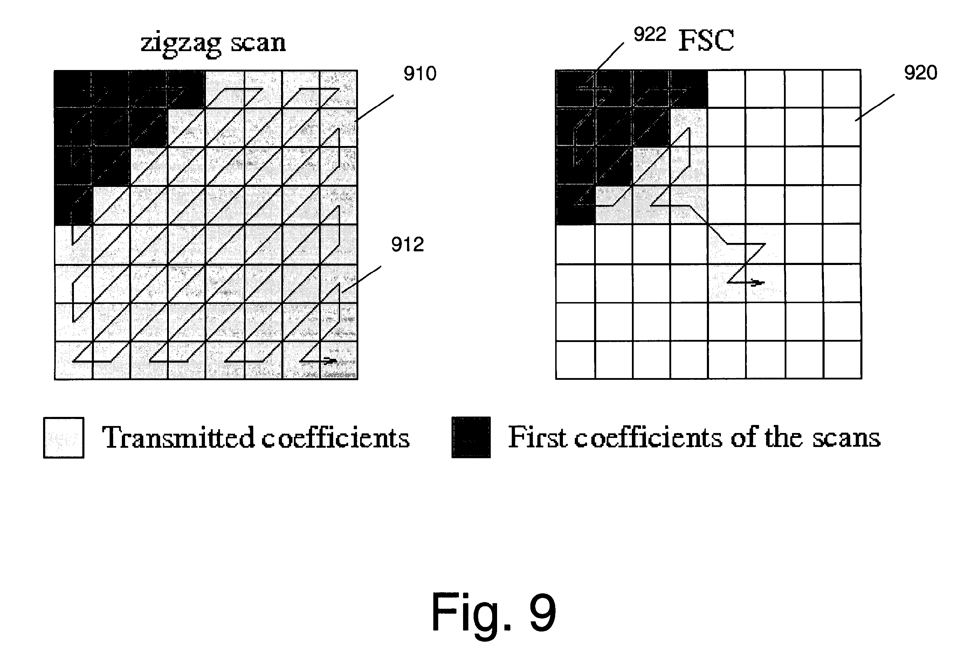

Figure 9 shows the first ten coefficients (dark gray) scanned by an ordinary zig-zag scan 912 applied to a non frequency selective encoded block 910 and the first ten coefficients scanned by a frequency selective scan 922 applied to a frequency selective encoded block 920. Even if the order of scan 912 for a zig-zag scan differs from that of frequency selective scan 922, the order of the first ten coefficients remains the same. The remaining coefficients (marked by light gray) scanned after the first ten coefficients by a zig-zag scan are different from the remaining coefficients scanned by a frequency selective scan.

The experiments confirmed that the first coefficients, for the ordinary scan and for the frequency selective scan, are enough to facilitate a decision about enabling or disabling of the frequency selective encoding and scan for each block. As these coefficients are always transmitted at the beginning, independently from the scan, they can be read at the decoder side without knowing the scan.

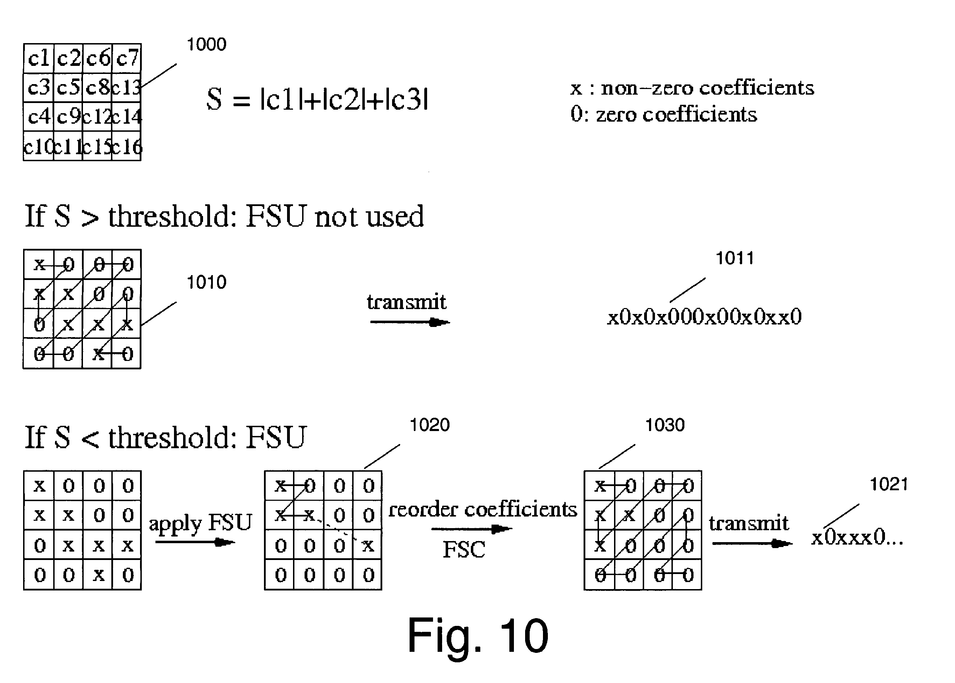

Figure 10 schematically illustrates the encoding method in accordance with this embodiment of the present invention. A 4 x 4 block 1000 comprises sixteen frequency coefficients numbered c1 to c16. In general, the present invention is not limited to the particular size of a block such as 8 x 8 or 4 x 4 and may be applied to an arbitrarily sized block. However, in present encoding algorithms, such as H.264/MPEG-4 AVC, blocks of 8 x 8 and 4 x 4 form the basis for the transformation. The sum S of the absolute values of the first three coefficients c1, c2 and c3 is calculated

$$S = |c1|+|c2|+|c3|.$$

The sum of absolute values S is then compared to a threshold. Preferably, the threshold is predefined. It can be fixed, or can be a part of the encoder and decoder settings or even dynamically adjustable. It is an advantage if the threshold is specified differently for various block sizes, especially in the case where the number of coefficients used for the decisions about enabling and disabling of frequency selective scan differs for different block sizes. If the sum of absolute values S is greater than or equal to the threshold, the prediction error for this block contains too many frequencies. In such a case, the frequency selective encoding (abbreviated in the Figure by FSU - frequency selective update) is disabled and the coefficients are scanned according to an ordinary scan such as a zig-zag scan 1010. If the sum of absolute values S is smaller than the threshold, frequency selective encoding is enabled and the coefficients are scanned according to the frequency selective scan 1020.

In general, the sum of absolute values S may be calculated over an arbitrary number of coefficients common to the ordinary scan and to the frequency selective scan. It does not necessarily need to be the maximum of common coefficients. The sum S of absolute values may also be replaced by any other measure such as sum of square coefficient values, the measure may be further normalized by the number of coefficients considered, the values of coefficients may be further weighted. However, it may be any other measure based on, for example, an arbitrary function of coefficient values or the number of those common coefficients having certain value. Such measure, together with the value of the threshold are to perform a decision about enabling or disabling the frequency selective encoding for the current block and to choose the appropriate scan. The step of frequency selective encoding includes re-ordering of the coefficients in accordance with the quantization matrix and applying the scan 1030 to the re-ordered coefficients. The serialized stream of coefficients 1021 or 1011 is then entropy encoded and the resulting bit stream is stored or transmitted.

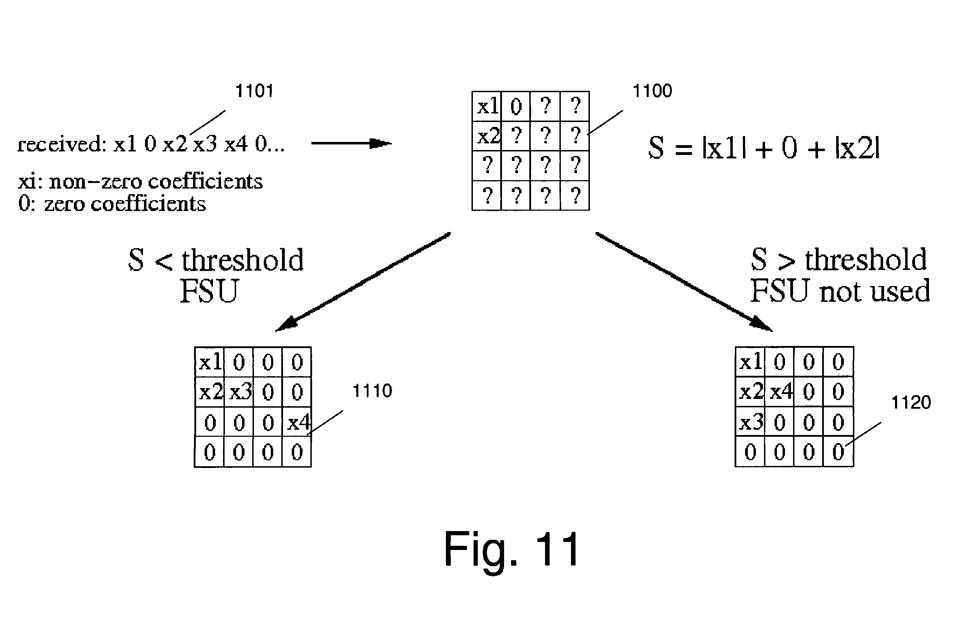

The corresponding decoding method is schematically illustrated in Figure 11. First, the received levels of the coefficients 1101 common to both scans are read resulting in schematic block 1100 with unknown order of the remaining coefficients. The first three coefficients can be decoded because these coefficients are scanned in the same order in both scans. In the example in Figure 11, the first three coefficients x1, 0, and x2 of the encoded 4 x 4 block are read. The sum S of absolute values of these three coefficients

$$S = |x1|+|0|+|x2|$$

is then computed and compared to the threshold in the same way as at the encoder. Depending on the result of this comparison, the remaining coefficients are inverse scanned according to the corresponding scan which is either a zig-zag scan 1120 or the frequency selective scan 1110. After being inverse scanned, the block 1110 or 1120 is inverse transformed to obtain the pixel values of the block being decoded.

In accordance with another embodiment of the present invention, the scan order is determined based on the number of non-zero coefficients or on the number of zero-coefficients. This parameter is also available at both encoder and decoder. The number of non-zero coefficients corresponds to the number of pairs run-level, if run-length encoding is applied as described in the background section. For instance, in the H.264/MPEG-4 AVC CAVLC coding, the scan order may be correspondingly determined based on number of levels (unsigned quantized coefficient values) and/or number of trailing ones. The number of zero coefficients may be similarly derived based on total number of zeros between the non-zero coefficients and/or based on the number of zeros within the entire block. In general, statistic measures based on the number of coefficients having certain value, may be used, since they also do not require knowledge of the scan order to be determined.

In accordance with still another embodiment of the present invention, the scan order is determined based on a measure calculated using the levels if run-length encoding is applied to the scanned transformation coefficients. The values of non-zero coefficients (levels) may provide a more precise indication for the choice of the scan order. Again, such measure can be calculated equally by the encoder and the decoder without knowing the scan order applied.

The encoder and the decoder in the previous examples determined the scan order by selecting it from a set of predefined scan orders. However, the scan order may be determined also adaptively, i.e., not only from a group of predefined and/or fixed scans. For instance, the values of the first N coefficients may be used to define the scan order, together with their position within the block. A simple example may be to distinguish if the first N coefficients at different positions are zero or not and based on such a binary pattern to select one of the possible $2^N$ scan orders. Here, the $2^N$ scan orders may be predefined. For instance, each of $2^N$ binary sequence may have a scan order assigned. The assignment may be obtained, for instance by optimizing using a selected training set of blocks. Another possibility is to use for training the already coded blocks of the same image or sequence of images. This allows obtaining of the same dynamic assignment at the encoder and at the decoder.

The values used to determine the scan order do not necessarily have to be limited to a binary symbol (zero/non-zero), the scan order may arbitrarily be determined based on the transformation coefficient values and their position. In addition, the information from already coded block may be employed to determine the scan order. Such information from the previous blocks may be the values of the coefficients of such blocks, the scan chosen for such previous blocks, or any other information related to such blocks.

The degree of adaptation may be further increased and the scan may be determined adaptively within a particular block. Accordingly, the scan order for an *(i+1)*st coefficient is determined based on the values of *i* previously scanned coefficients (or their subset), *i* being an integer equal to or greater than 1.

In accordance with another embodiment of the present invention, the first N coefficients are scanned with a predetermined fixed scan and it is determined if the value of each of the coefficients is a zero value or a non-zero value. An N bit long binary word is then formed, the positions within the binary word corresponding to the positions of the scanned coefficients, the binary word having zero at the positions corresponding to zero coefficients and having one at the positions with non-zero coefficients. The binary word is then used to determine the position of the next *(N+1)*st coefficient to be scanned.

The assignment between the value of the binary word and the position of the next coefficient to be scanned has to be known to both, encoder and decoder. Such assignment is preferably based on values of coefficients in previously encoded blocks and thus, also dynamically adaptable to the character of the image and/or video sequence. In this way, a scan optimized for the image characteristics and adapted to the current block may be selected and the resulting coding efficiency increased. Moreover, no additional information needs to be signalized. Alternatively, the assignment may be fixed, known to both the encoder and the decoder, or it may be signalized.

Once, the scan for the *(N+1)*st coefficient is determined, the position of the (*N*+2)nd coefficient to be scanned may be determined also based on the value of this coefficient alone or in combination with the values of previous coefficients. For example, the above mentioned N bit long binary word may be extended to an *N+1* bit long binary word by determining if the value of *(N+1)*st coefficient is a zero value or a non-zero value. The *N+1* bit long binary word may then be used to determine the position of the next coefficient to be scanned. In this way, namely by extending the binary word based on the value of the newly scanned coefficient, the scan for the entire block or macroblock may be determined.

The decision about the position of the next coefficient to be scanned does not necessarily need to be determined based on the binary value corresponding to the information if the coefficients already scanned are zero or non-zero. It may be an advantage to consider the for instance the values of the coefficients, the absolute values of the coefficients, the square values of the coefficients, or any other function of the coefficients which provides more information than a simple binary number. Accordingly, the scan position of the next coefficient to be scanned may be determined based on the values of previously scanned coefficients or based on the value of the single coefficient that has been scanned as the last one.

These examples only illustrate some examples of various embodiments of the present invention. Other systems for determining the scan order based on the values of transform coefficients may obviously be used as well. Adapting the scan within the current block enables better flexibility of scanning and thus, even blocks containing edges and thus having non-zero coefficient values not only in the upper left corner, may be scanned compactly and further encoded efficiently by an entropy code.

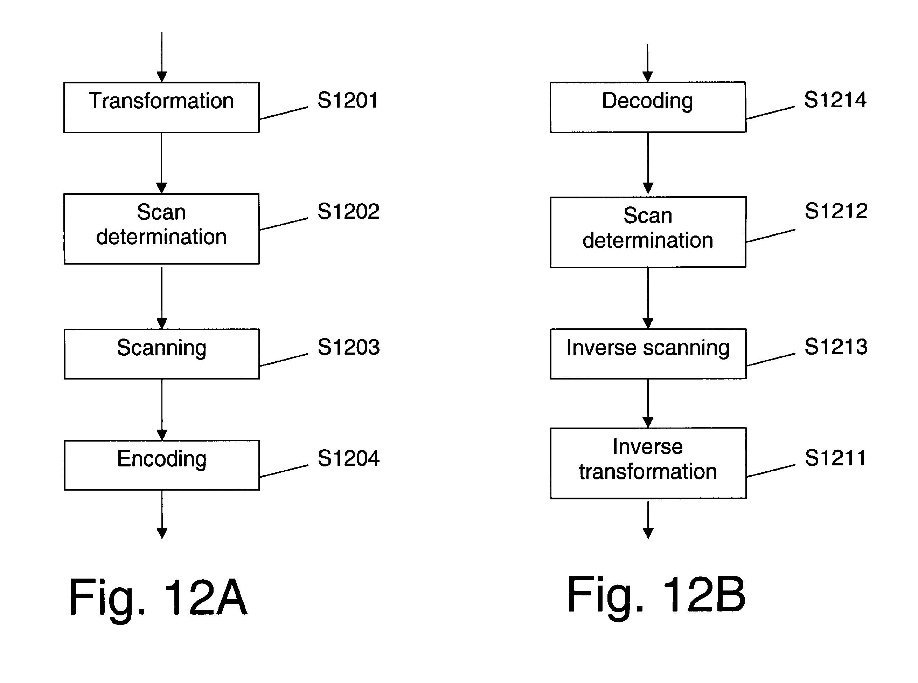

Figure 12A and Figure 12B summarize the steps of a method according to the present invention applied at the encoder and the decoder in the execution order, respectively. At the encoder, an image pixel block is first transformed in step S1201 into the transform coefficients. All or some of the transform coefficients are then used to determine a scan order in step S1202. The scan order, determined in the step S1202 is then applied to scan the transform coefficients in step S1203. The scanned (serialized) sequence of the transform coefficients is then encoded in step S1204.

At the decoder, the encoded syntax elements carrying transform coefficient values are decoded in step S1214 and used to determine a scan order in step S1212. The scan order determined in the step S1212 is used in the step S1213 for inverse scanning of the transformation coefficients, which results in forming of a block of transformation coefficients. The block of transform coefficients obtained in the step S1213 is finally inversely transformed in step S1211 to obtain the pixel values of the current block.

Frequency selective encoding as well as switching between the frequency selective encoding and an ordinary encoding may be enabled or disabled within the encoder setting as an optional feature. It may be beneficial to enable or disable the frequency selective encoding with a finer granularity, for instance, on a per slice basis, or even per smaller image areas such as macroblocks or blocks. The use of frequency selective encoding and the possibility of disabling it locally in accordance with the present invention may be signaled, for instance, in the slice header. Such a slice header may contain two flags:

- The first (enabling) flag is equal to zero if frequency selective encoding is not used at all in the slice and equal to one if frequency selective encoding is used.

- The second flag is present only if the previous flag is equal to one. It is equal to zero if frequency selective encoding is used for all the blocks of the slice, and it is equal to one if frequency selective encoding is disabled for certain blocks.

When the second flag is equal to one, the number of low frequency coefficients used to determine the scan may be provided. However, the number of the low frequency coefficients may also be predefined dependent on the size of the block or preset for the entire sequence. Furthermore, the thresholds used at the encoder side may be provided if the second flag is set. This gives the encoder the liberty to control how often frequency selective encoding should be used within the slice.

The explicit signaling is therefore shifted at slice level instead of the block level. It may even be signalized once per sequence or within a network abstraction layer unit in an arbitrary position within the video sequence. The signaling of the scan at block level is performed implicitly, for instance, through the first $N$ coefficients. The coding efficiency of the frequency selective encoding is thus preserved, while enabling local adaptation in order to reach the same subjective quality as in the H264/AVC encoding algorithm.

The above description is concentrated on the possible switching between the zig-zag scan and the frequency selective scan using the first transmitted coefficients. However, this was an example only and the present invention can be applied to switching between the frequency selective scan and any other scan. As long as the order of the first low frequency coefficients of the frequency selective scan and the other scans is maintained, the present invention as described above may be used to switch the scans. Moreover, the order of the first scanned coefficients does not even need to be really known. In general, it is possible to calculate a measure such as sum of absolute values also for any $N$ coefficients arbitrarily ordered, but located within the same area of the current block, not necessarily at the beginning. For instance, the zig-zag scan may start with a DC coefficient and continue with the coefficient below (cf. Figure 3) while the frequency selective scan may start with the DC coefficient and continue with the coefficient on the right (cf. Figure 7). In both scans, the same coefficients are scanned, even if their order differs. Such calculating of a measure based on values of non-zero transformation coefficients regardless their position within a known location is only possible if all coefficients are quantized in the same way in order to enable unambiguous and position independent inverse quantization. As soon as the quantization parameters for such coefficients differ, for instance, if a quantization matrix is used, it is not possible to recover the true coefficient values without knowing their position.

The examples presented previously focus on switching between two scans, but this technique can, however, be applied to switch between more than two scans. For instance, if two different frequency selective segmentation patterns are used within the same slice with two different corresponding frequency selective scans, the present invention can be applied to switch between three scans or even more. An additional threshold may be necessary. The present invention is also applicable for determining of the scan rather than selecting from a small predefined set of scans. The scans to be switched between may also be adapted to another type of entropy encoding than run-length coding. If quantization is applied, the determination of the scan order is to be performed based on the quantized coefficients since they are known at the encoder as well as at the decoder. However, the quantization does not necessarily have to be applied.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/MPEG-4 AVC based video coding system, and the terminology mainly relates to the H.264/MPEG-4 AVC terminology. However, this terminology and the description of the various embodiments with respect to H.264/MPEG-4 AVC based coding is not intended to limit the principles and ideas of the invention to such systems. Also the detailed explanations of the encoding and decoding in compliance with the H.264/MPEG-4 AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/MPEG-4 AVC coding currently discussed by the JVT.

Summarizing, the present invention relates to improving the performance of video encoding in terms of coding efficiency while maintaining the same image quality. Accordingly, a current block of image to be encoded is transformed into a block of transformation coefficients. The values of some of the transformation coefficients are used to determine the scan to be used when serializing the two-dimensional block of coefficients into a sequence of coefficients. In accordance with the determined scan order, the coefficients are scanned and input to further encoding. Similarly, the decoder utilizes the values of transformation coefficients to determine the order of the inverse scanning to be applied in order to form a block of coefficients out of a sequence of received syntax elements after their decoding.

**Claims**

1. A method for encoding image data divided into blocks of pixels, comprising the steps of:

    transforming (S1201) pixel values of a current image block into transform coefficients;
    scanning (S1203) transform coefficients of the current image block sequentially according to a scan order; and
    encoding (S1204) the scanned transform coefficients,

    **characterized by** the step of
    determining (S1202) the scan order for the current image block based on transform coefficient values of the current image block.

2. A method for decoding encoded image data divided into blocks of pixels, comprising the steps of:

    decoding (S1214) encoded scanned transform coefficients of a current image block,
    inverse scanning (S1213) of the decoded transform coefficients of the current image block sequentially according to an inverse scan order; and
    transforming (S1211) inverse scanned transform coefficients of the current image block into pixel values;

    **characterized by** the step of
    determining (S1212) the inverse scan order for the current image block based on transform coefficient values of the current image block.

3. The method according to claim 1 or 2 wherein the scan order is determined (S1202, S1212) by evaluating a measure such as a sum, the measure being calculated based on values of the first N transform coefficients, the first $N$ coefficients being common for all scans possible to be determined.

4. The method according to any of claims 1 to 3 wherein at least one of encoding (S1204) and decoding (S1214) further comprises the step of entropy coding of levels, a level being a coded value of a quantized transformation coefficient, and wherein the scan order is determined based on levels.

5. The method according to claims 1 to 4 wherein the scan order is determined (S1202, S1212) adaptively based on the values of transform coefficients of the current image block and based on values of coefficients of previously encoded blocks.

6. The method according to any of claims 1 to 4 wherein the scan order is selected (S1202, S1212) from a plurality of predefined scan orders such as a zig-zag scan, or a frequency selective scan in which only a subset of transform coefficients is scanned while the remaining coefficients are set to zero.

7. The method according to any of claims 1 to 6 wherein the scan order is determined (S1202, S1212) based on comparison of a measure determined based on the values of transformation coefficients with a predefined threshold.

8. The method according to any of claims 1 to 7 further comprising the step of enabling and/or disabling the determining of the scan order, the enabling and/or disabling being triggered by an enabling flag explicitly signalled together with the encoded transform coefficients.

9. An apparatus (401) for encoding image data divided into blocks of pixels, comprising:

   a transformation unit (410) for transforming pixel values (409) of a current image block into transform coefficients (411);
   a scanning unit (420) for scanning transform coefficients (411) transformed by the transformation unit (410) sequentially according to a scan order; and
   an encoder (430) for encoding the transform coefficients (421) scanned by the scanning unit (420),

   **characterized by**
   a determining unit (440) for determining the scan order for the current image block based on transform coefficient values (411) of the current image block.

10. An apparatus (402) for decoding encoded image data divided into blocks of pixels, comprising:

    a decoder (470) for decoding encoded scanned transform coefficients (451) of a current image block,
    a block forming unit (480) for inverse scanning of the decoded transform coefficients (471) of the current image block sequentially according to an inverse scan order; and
    a transformation unit (490) for inverse transforming inversely scanned transform coefficients (481) of the current image block into pixel values (499);

    **characterized by**
    a determining unit (460) for determining the inverse scan order for the current image block based on transform coefficient values (471) of the current image block.

11. The apparatus according to claim 9 or 10 wherein the determining unit (440, 460) is capable of determining the scan order by evaluating a measure such as a sum, the measure being calculated based on values of the first N transform coefficients, the first N coefficients being common for all scans possible to be determined.

12. The apparatus according to any of claims 9 to 11 wherein the coding (430, 470) comprises entropy coding of levels, a level being a coded value of a quantized transformation coefficient, and wherein the scan order is determined based on levels.

13. The apparatus according to claims 9 to 12 wherein the determining unit (440, 460) is capable of determining the scan order adaptively based on the values of transform coefficients of the current image block and based on values of coefficients of previously encoded blocks.

14. The apparatus according to any of claims 9 to 12 wherein the determining unit (440, 460) is capable of selecting the scan order from a plurality of predefined scan orders such as a zig-zag scan (912), or a frequency selective scan (922) in which only a subset of transform coefficients is scanned while the remaining coefficients are set to zero.

15. The apparatus according to any of claims 9 to 14 wherein the determining unit (440, 460) is capable of determining the scan order based on comparison of a measure (S) based on the values of transformation coefficients with a predefined threshold.

16. The apparatus according to any of claims 9 to 15 further comprising an enabler for enabling and/or disabling the determining unit (440, 460) to determine the scan order, the enabling and/or disabling being triggered by an enabling flag explicitly signalled together with the encoded transform coefficients.

Fig. 1

EP 2 182 732 A1

Fig. 2

EP 2 182 732 A1

Fig. 3

Fig. 4

Fig. 5

EP 2 182 732 A1

Updated coefficients
(zero or non-zero)

Non-updated coefficient
(always zero)

605

Fig. 6

EP 2 182 732 A1

701 702

| 1 | 2 | 6 | 7 |
| 3 | 5 | 8 | 13 |
| 4 | 9 | 12 | 14 |
| 10 | 11 | 15 | 16 |
| 17 | 18 |
| 19 | 20 |

□ regular zero-coefficients

▨ non-zero coefficients and
non-regular zero-coefficients

Fig. 7

a) non FSU block

b) FSU block

| x | 0 | 0 | 0 |
|---|---|---|---|
| x | x | 0 | 0 |
| 0 | x | x | x |
| 0 | 0 | x | 0 |

810

811

zigzag scan: x0x0x000x00x0xx0

| x | 0 | 0 | 0 |
|---|---|---|---|
| x | x | 0 | 0 |
| 0 | 0 | 0 | x |
| 0 | 0 | 0 | 0 |

820

821

FSC: x0xxx0...

x : non–zero coefficient

0 : zero coefficient

## Fig. 8

EP 2 182 732 A1

Fig. 9

Fig. 10

1101

received: x1 0 x2 x3 x4 0...

xi: non-zero coefficients
0: zero coefficients

| x1 | 0 | ? | ? |
|----|---|---|---|
| x2 | ? | ? | ? |
| ?  | ? | ? | ? |
| ?  | ? | ? | ? |

1100

$$S = |x1| + 0 + |x2|$$

S < threshold
FSU

S > threshold
FSU not used

| x1 | 0  | 0 | 0  |
|----|----|---|----|
| x2 | x3 | 0 | 0  |
| 0  | 0  | 0 | x4 |
| 0  | 0  | 0 | 0  |

1110

| x1 | 0  | 0 | 0 |
|----|----|---|---|
| x2 | x4 | 0 | 0 |
| x3 | 0  | 0 | 0 |
| 0  | 0  | 0 | 0 |

1120

# Fig. 11

EP 2 182 732 A1

Fig. 12A

Fig. 12B

EP 2 182 732 A1

Europäisches
Patentamt

European
Patent Office

Office européen
des brevets

**EUROPEAN SEARCH REPORT**

Application Number

EP 08 01 8805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 827 345 A (MITSUBISHI ELECTRIC CORP [JP]) 4 March 1998 (1998-03-04) * abstract * | 1,2,4,9, 10,12 | INV. H04N7/26 H04N7/50 |
| Y | * figure 4 * * column 3, line 1 - column 4, line 20 * * column 5, line 18 - line 48 * * column 7, lines 1-11 * * column 14, line 48 - column 15, line 4 * ----- | 6,14 | |
| A | US 5 767 909 A (JUNG HAE-MOOK [KR]) 16 June 1998 (1998-06-16) * abstract * * column 3, lines 32-38 * * claim 1 * ----- | 1-16 | |
| Y | EP 1 768 416 A (MATSUSHITA ELECTRIC IND CO LTD [JP]) 28 March 2007 (2007-03-28) | 6,14 | |
| A | * abstract * * paragraphs [0014], [0017] * ----- | 1-16 | TECHNICAL FIELDS SEARCHED (IPC) H04N |

The present search report has been drawn up for all claims

| Place of search | Date of completion of the search | Examiner |
|---|---|---|
| Munich | 4 March 2009 | Lindgren, Johan |

EPO FORM 1503 03.82 (P04C01)

**EP 2 182 732 A1**

## ANNEX TO THE EUROPEAN SEARCH REPORT
## ON EUROPEAN PATENT APPLICATION NO.

EP 08 01 8805

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2009

| Patent document cited in search report | | Publication date | Patent family member(s) | | Publication date |
|---|---|---|---|---|---|
| EP 0827345 | A | 04-03-1998 | JP<br>US | 8256266 A<br>5926574 A | 01-10-1996<br>20-07-1999 |
| US 5767909 | A | 16-06-1998 | CN<br>JP<br>KR | 1139357 A<br>8280032 A<br>178198 B1 | 01-01-1997<br>22-10-1996<br>01-05-1999 |
| EP 1768416 | A | 28-03-2007 | NONE | | |

**EP 2 182 732 A1**

REFERENCES CITED IN THE DESCRIPTION

**Patent documents cited in the description**

- EP 1720356 A

- EP 1768416 A